# EUROPEAN PATENT SPECIFICATION

(11) **EP 1 440 321 B1**
(45) Date of publication and mention of the grant of the patent: **15.10.2008**
(21) Application number: 02744347.2
(22) Date of filing: 14.06.2002
(51) Int. Cl.: G01P 9/04, G01C 19/56

(54) **ANGULAR RATE SENSOR HAVING A SENSE ELEMENT CONSTRAINED TO MOTION ABOUT A SINGLE AXIS AND FLEXIBLY ATTACHED TO A ROTARY DRIVE MASS**
WINKELGESCHWINDIGKEITSSENSOR MIT EINEM MESSELEMENT, DESSEN BEWEGUNG AUF EINE EINZIGE ACHSE BESCHRÄNKT WIRD UND DAS FLEXIBEL AN EINER DREHANTRIEBSMASSE ANGEBRACHT IST
CAPTEUR DE VITESSE ANGULAIRE POSSEDANT UN ELEMENT DE MESURE CONTRAINT A SE MOUVOIR AUTOUR D'UN AXE UNIQUE ET FIXE DE MANIERE FLEXIBLE A UNE MASSE D'ENTRAINEMENT ROTATIVE

(30) Priority: 14.06.2001 US 882807
(43) Date of publication of application: 28.07.2004
(73) Proprietor: Microsensors Inc., Costa Mesa, CA 92626 (US)
(72) Inventor: REEDS, John, W., San Juan Capistrano, CA 92675 (US); HSU, Ying, W., Huntington Beach, CA 92648 (US)
(74) Representative: Klein, Thomas
(86) International application number: PCT/US2002/018900
(87) International publication number: WO 2002/103364

(56) References cited:
- US-A- 5 955 668
- US-A- 5 987 986

## Description

### Field of the Invention

The present invention relates generally to sensors and, more particularly, to a method of driving and structure for an angular rate sensor having a sense element that is substantially restricted to motion about a single axis.

### Background of the Related Art

This invention involves a class of sensors that use a vibratory element for measuring angular velocity. These sensors (including others of different construction) are commonly referred to as gyros (for gyroscopes), or in the case or very small gyros, micro-gyros. In micro-gyros, the elements are small, typically around 1 square millimeter.

Micro-gyros are generally produced from silicon wafers, using photolithographic techniques, in accordance with the principles of Micro-ElectroMechanical Systems (MEMS). The small size of these elements enables large numbers of micro-gyros to be formed from a single silicon wafer using micro-fabrication techniques.

A micro-gyro measures the angular rate of rotation about an input axis or so-called "rate axis". Micro-gyros may generally be classified as linear or as rotary. In either case, a mass is driven into vibration relative to a "drive axis" that is orthogonal to the rate axis. An electrostatic comb-drive structure is commonly used to oscillate the mass. If the mass is subject to rotation about the sensor's rate axis at some angular rate of rotation, then oscillatory coriolis forces acting on the vibrating mass will naturally cause it to also vibrate relative to a "sense axis" that is orthogonal to the rate and drive axes. The coriolis force generated is proportional to the rate of rotation of the sensor about the rate axis and the amplitude of oscillation (at the applied drive frequency) of the inertial mass about the drive axis.

Some micro-gyro embodiments have only a single "proof mass" that is both driven and sensed. U.S. Patent No. 5,992,233 entitled "MICROMACHINED Z-AXIS VIBRATORY RATE GYROSCOPE" is representative of a linear micro-gyro wherein a single "proof mass" is driven into vibration along a drive axis and wherein coriolis-induced motions of that same proof mass are detected along a sense axis that is orthogonal to the drive axis. The proof mass, in other words, is both the drive mass and the sense mass.

Other micro-gyros provide a drive mass that quite literally carries a sense mass. The sense mass is coupled to and moves with the drive mass as both vibrate relative to the drive axis, but the sense mass is free to move relative to the sense axis under the presence of coriolis forces.

U.S. Patent No's 5,377,544; 5,450,751; 5,226,321; 5,349,855; 6,067,858; and 5,349,855 are exemplary of gyros where the rate sensing element is a part of the driven structure, and is therefore in motion even in the absence of any rate input. This continuous motion of the sense element relative to the drive axis can produce a sense output due to changes in the fringing effects of sense capacitors, manufacturing tolerances in surface contours or planarity, and other influences. These effects can be very significant, because the amplitude of the desired sense motion may be an order of magnitude or more below that of the drive motion, so any secondary influences caused by the drive motion may create an excessively large noise in the sense signal. A design in which the inertial mass may be driven about the drive axis without inducing a motion in the sense element in the absence of a rate input would therefore be highly preferable.

In patent numbers 5,408,877 and 5,515,724 a gyro is introduced wherein the inertial mass may be driven independent of the sense element. A similar concept was presented earlier in patent number 5,488,862. These design concepts, however, are specifically limited to a gimballed drive sensing a rate input about an axis perpendicular to the plane of the substrate, typically referred to as the z-axis. A device sensitive to rotational rate about one of two axes in the plane of the substrate, typically referred to as the x-axis and the y-axis, is generally preferred; as it permits two gyro axes to be established in a single substrate plane. This also allows the possibility of producing a 2-axis gyro on a single chip, with essentially perfect orthogonality. The '877 / '724 and '862 designs are also poorly adapted for many basic micromachining processes, because in order to achieve a substantial motion of the inertial mass about the in-plane drive axis, a deep pit must be formed under the inertial mass. This would require an additional and relatively expensive process step.

A unique micro-gyro developed by the assignee of this invention is disclosed in U.S. Patent No. 5,955,668. The '668 patent is commonly owned by the assignee of this invention.

The gyro design in the '668 patent may be regarded as an x-axis or y-axis gyro because it is sensitive to a rotation about an axis in the plane of the substrate. In the preferred embodiment, the '668 patent discloses a sense mass provided as a disk-shaped sense plate and a drive mass provided as a ring. The sense plate is supported from two anchors extending above the substrate. The ring, in turn, is supported by flexures extending from the sense plate and it surrounds the sense plate. The drive ring and sense plate are statically decoupled in that the drive ring can move independently about the drive axis. In the absence of a rotational rate input, and under ideal conditions, the driven mass is vibrated but the sense element remains still. In the presence of rotational rate, however, coriolis-induced energy is dynamically transferred from the drive mass (vibratory element) to the sense element through the flexures. In addition to being statically decoupled about the drive axis, the drive and sense masses are dynamically decoupled in that the natural resonant frequencies of the design are tuned such that when the sense element responds to a coriolis force in the presence of a rate input, the sense mass moves about the sense axis but the drive mass does not substantially move about the sense axis.

The '668 patent discloses that the rocking motion of the disk about the sense axis does not move the ring, and that any energy tending to create such motion "is absorbed in the structure with substantially no effect." (see e.g.Col. 7, lines 22-32). In order to achieve the dynamic decoupling mentioned above, therefore, the plate-ring-flexure system in the '668 patent was specifically designed to operate in a second mode where the plate and ring elements oscillate about the sense axis in substantial opposition to one another. The sense plate was dynamically decoupled from the ring by tuning the system to make the plate's amplitude of motion about the sense axis substantially greater than the ring's amplitude of motion about that same axis.

The '668 design was an improvement to the existing art, but other decoupled designs are possible. In particular, it could be advantageous for a micro-gyro to have an operational mode that is at or near the lowest natural resonant frequency of the device, while inhibiting the motion of the sense element with respect to the drive axis.

### SUMMARY OF THE INVENTION

The present innovation differs from the gyro disclosed in the '668 patent primarily in that although the sense element does not substantially move about the drive axis, the drive element does move about the sense axis with the sense element in the presence of an input rate. By designing the gyro such that both sense and drive elements move together in the sense mode, we beneficially allow it to operate at or near the lowest natural resonant frequency of the device while inhibiting the motion of the sense element with respect to the drive axis.

This design is also a considerable improvement over the '877 / '724 and '862 designs, in that it is an x-axis or y-axis gyro. Because the z-axis is used as the drive axis, a relatively large displacement of the inertial mass is possible, limited primarily by the linear range of the rotation flexures. Also, it is possible to produce both x-axis and y-axis orientations on a single chip, ensuring orthogonality of the axes.

This design also resembles the '688 design and is distinct and superior to the '877 / '724 design in that the drive mass is situated external to the centrally located sense mass. This allows the sense mass to be supported by a single centrally located anchor, minimizing any thermal stresses or warpage. This also provides a significant advantage in allowing the electrical connections to the drive electrodes to be routed without crossing under the sense element or any other part of the sensor structure.

The invention essentially isolates the inertia of the drive mass about the drive axis from directly influencing the sense element. The sense element is substantially restricted to a single-degree-of-freedom motion about the sense axis. In the preferred embodiment, the sense oscillation is a coupled mode in which the drive mass and the sense element move substantially in phase about the sense axis.

The preferred embodiment of the invention includes an outer ringshaped drive mass which oscillates about a drive axis, and an inner plate which rocks in conjunction with the drive mass about an output axis in response to a coriolis force. The torque or resulting displacement about the output axis may be measured by any suitable means, such as capacitance, magnetic force, piezoelectric or piezoresistive effect, or optical signals.

The inner plate serves as a sensing element. In the preferred embodiment it is supported by a pair of hinges, flexures, or flexural arrangements essentially restricting the sensing plate to rocking about a single axis, known as the sense axis. The hinges are connected to one or more posts, also known as anchors, which serve to connect the device to the substrate. The outer drive mass is connected to the inner sense element by a plurality of hinges or flexural arrangements whose primary function is to permit rotation of the drive mass about the drive axis without causing the sense element to rotate about the drive axis. In the presence of a rate-induced coriolis force, these same flexural arrangements serve to couple the coriolis energy into the sense mass.

### BRIEF DESCRIPTION OF THE DRAWINGS

The just summarized invention can be best understood with reference to the following description taken in view of the drawings of which:

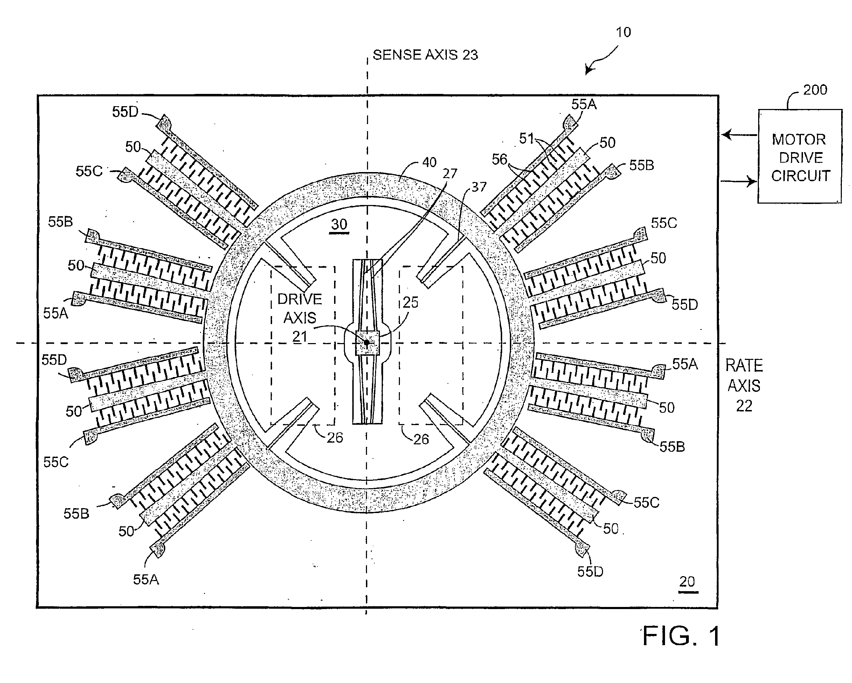

Figure 1 is a simplified top plan view of a preferred embodiment of a micro-gyro 10 designed in accordance with this invention.

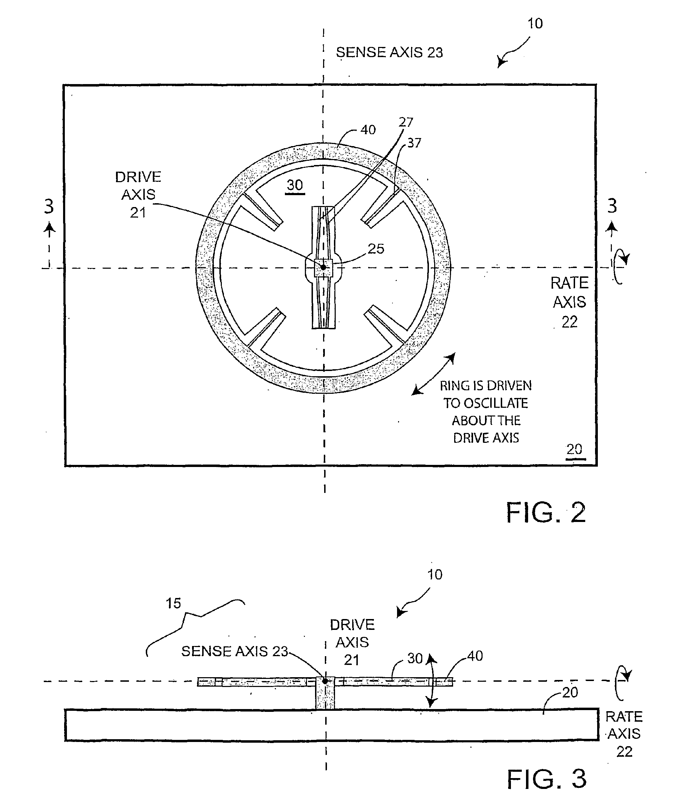

Figure 2 is a further simplified and dimensionally exaggerated version of the micro-gyro of Figure 1, the arrow showing the direction in which the ring 40 is driven to oscillate about a drive axis 21;
Figure 3 is a sectional side view of the simplified micro-gyro 10 of Figure 2, taken along the rate axis and section lines 3-3, showing the sense plate 30 and the drive ring 40 supported above the substrate by the anchor 25, the arrow generically showing that the ring-plate-flexure system 15 oscillates about the sense axis 23 in the presence of an oscillatory coriolis force;

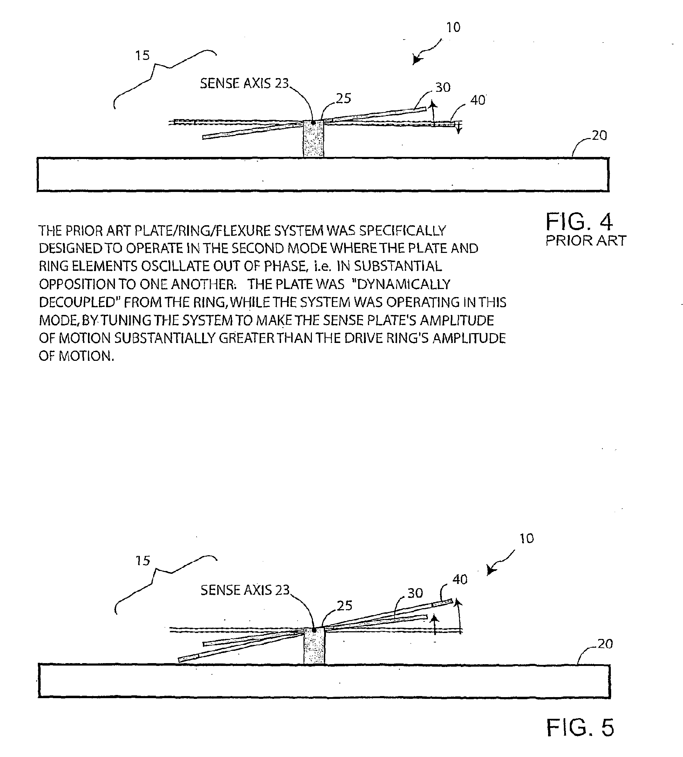

Figure 4 is a sectional side view that that shows a mode of oscillation that is consistent with the teachings of the '668 patent, where a substantially out of phase displacement of the sense plate 30 and the drive ring 40 is produced by coriolis force in the presence of a rotation about the rate axis; and
Figure 5 is a sectional side view that shows a mode of oscillation that is representative of the preferred embodiment of this invention where a substantially in-phase displacement of the sense plate 30 and the drive ring 40 is produced by coriolis force in the presence of a rotation about the rate axis.

### DETAILED DESCRIPTION OF THE PREFERRED EMBODIMENTS

Figure 1 is a simplified top plan view of a micro-gyro 10 that is designed and driven in accordance with this invention. It should be understood, however, that the inventive concepts of this invention may be adapted to a variety of micro-gyro configurations.

The main goal of the '668 patent was to provide a gyro that operated in a mode where the drive ring oscillated about the drive axis but the sense plate did not and where the sense plate rocked about the sense axis but the drive ring substantially did not. The '668 patent inherently relied on operating in the second mode where the sense plate and drive ring moved out of phase relative to one another about the sense axis.

The '668 patent represents a significant advancement, but it turns out that an operational mode not disclosed or suggested by the '668 patent has significant advantages of its own. In particular, these inventors have determined that for some applications there areadvantages to a micro-gyro system that operates in the first mode, where the sense plate and drive ring are moving together and where the drive ring's motion about the sense axis is therefore substantial. The resulting micro-gyro I can be even more resistant to excitation from environmental vibration.

### Micro-Gyro Structure

Figure 1 discloses a micro-gyro 10 that may be constructed and driven in accordance with the present invention. As shown, the micro-gyro 10 is of substantially planar construction, and it senses rotational rate about a rate axis 22 that is substantially parallel to the plane of the micro-gyro 10. The micro-gyro 10 shown, therefore, may be regarded as an x-axis or y-axis gyro.

In more detail, the micro-gyro 10 comprises a substrate 20, an anchor 25 extending upward from the substrate 20, and first inner flexures 27 that are connected to the anchor 25 and extending from the anchor 25 above and substantially parallel to the plane of the micro-gyro 10.

A sense plate 30 is flexibly connected to the anchor 25 via the first flexures 27. The sense plate 30 is constrained to a single-degree-of-freedom rocking motion about a sense axis 23 that is substantially parallel to the plane of the micro-gyro 10 and substantially perpendicular to the rate axis 22 because the geometry of first inner flexures 27 substantially prohibits rotation about the drive axis 21 and about the rate axis 22 and substantially permits a rocking motion about the sense axis 23. The sense plate 30 interfaces with one or more sense electrodes 26 as is well known in the art.

Second outer flexures 37 are connected to the sense plate 30 and extend from the sense plate 30 substantially parallel to the plane of the micro-gyro 10.

A drive ring 40 is flexibly connected to the sense plate 30 via the second flexures 37. The drive ring 40 moves about a drive axis 21 that is perpendicular to the plane of the micro-gyro and to both the rate and sense axes 22, 23. Due to the geometry of the first and second flexures 27, 37, the drive ring 40 can move about the drive axis 21 while the sense plate 30 remains stationary.

Lastly, a drive means for oscillating the drive ring 40 about the drive axis 21 is provided. In the embodiment shown, the drive means comprises a plurality of driven arms 50 that extend radially outward from the drive ring 40 between a pair of drive electrodes 55, a plurality of partially overlapping comb-fingers 51, 56 that form an electrostatic comb-drive structure, and a motor drive circuit 200 that suitably applies voltages that vibrate the ring element 40 at a desired frequency. The exact structure of the drive means is not critical to the present invention and any suitable drive means may be used.

As more clearly shown in Figure 2, the second flexures 37 and the drive ring 40 are suitably designed such that the drive ring 40 has a natural frequency **f_{D}(natural)** of oscillation around the drive axis 21. The natural frequency **f_{D}(natural)** may be established using well-known methods of analysis that involve the variation of masses, geometries and stiffness. In the preferred embodiment, the actual drive frequency of the ring **f_{D}(actual)** is controlled to match the natural frequency **f_{D}(natural),** which is designed to be about 6,000 Hz.

Additionally, as best shown by viewing Figures 2 and 3 together, the first flexures 27, the sense plate 30, the second flexures 37 and the drive ring 40 form a plate-ring-flexure system 15, which has a natural sense frequency **f_{S}(natural)** about the sense axis 23 that is close to the drive frequency **f_{D}(actual).** This allows for an efficient coupling of energy in the presence of coriolis forces. The natural sense frequency **f_{S}(natural)** is also established using well-known methods of analysis that involve the variation of masses, geometries and stiffness. In the preferred embodiment, **f_{S}(natural)** is designed to be about 5800 Hz.

As shown in Figure 4, the natural sense frequency **f_{S}(natural)** has previously been selected such that it corresponds to the natural frequency **f_{S2}(natural)** associated with a second mode of operation where the sense plate 30 and the drive ring 40 move substantially out of phase relative to one another.

As shown in Figure 5, however, the plate-ring-system 15 in the preferred embodiment of this invention is uniquely designed to operate in a first mode where the plate 30 and ring 40 oscillate substantially in-phase due to coriolis acceleration in response to any rotation about the rate axis 22. This is accomplished by driving the ring at a drive frequency **f_{D}(actual)** that is close to a first fundamental mode frequency **f_{S1}(natural)** that constitutes a lowest natural resonant frequency of the plate-ring-flexure system 15 about the sense axis 23.

### Method of Driving

Another embodiment of the invention is a method of driving a micro-gyro 10 that, with exemplary reference to Figure 1, is comprised of a substrate 20, an anchor 25 extending upward from the substrate 20, a sense plate 30 supported from the anchor 25 by first flexures 27 that constrain its motion to a single-degree-of-freedom rocking motion about a sense axis 23; and a drive ring 40 supported from the sense plate 30 by second flexures 37 that permit the drive ring 40 to angularly oscillate about a drive axis 21 that is substantially perpendicular to the sense axis 23 and also permit the drive ring 40 to move in a rocking motion about the sense axis 23; the sense plate 30, the drive ring 40, and the first and second flexures 27 and 37 forming a plate-ring-flexure system 15 (see Figure 2) that has a first resonant mode associated with a first natural frequency where the plate 30 and ring 40 rock substantially in phase about the sense axis 23 and a second resonant mode associated with a second natural frequency where the plate 30 and ring 40 rock substantially in opposite phase about the sense axis 23.

The method comprises the steps of (1) providing a drive means for angularly oscillating the drive ring 40 about the drive axis 23 such that a rotational rate of the micro-gyro 10 about a rate axis 22 that is substantially perpendicular to both the sense axis 23 and the drive axis 21 creates an oscillatory coriolis force that causes the plate-ring-flexure system 15 to angularly oscillate about the sense axis 23; and (2) oscillating the drive ring 40 about the drive axis 21 with the drive means at a drive frequency substantially matching the natural resonant frequency of the drive ring 40 about the drive axis 21, and close to the first natural frequency of the first resonant mode about the sense axis 23 of the plate-ring-flexure system 15 such that the plate 30 and ring 40 rock substantially in phase about the sense axis 23.

The preferred drive means for oscillating the drive ring 40 at the drive frequency comprises a plurality of driven arms 50 that extend radially outward from the drive ring 40 between a pair of drive electrodes 55, a plurality of partially overlapping comb-fingers 51, 56 that form an electrostatic comb-drive structure, and a motor drive circuit 200 that suitably applies voltages causing the ring element 40 to oscillate at the desired frequency. The exact structure of the drive means is not critical to the present invention and any suitable drive means may be used.

## Claims

1. A method of driving a micro-gyro (10) comprised of a substrate (20), an anchor (25) extending upward from the substrate (20), a sense plate 30 supported from the anchor (25) and above the substrate (20) by first flexures (27) that constrain its motion to a single-degree-of-freedom rocking motion about a sense axis (23), and a drive ring (40) supported from the sense plate (20) by second flexures (37) that permit the drive ring (40) to angularly oscillate about a drive axis (21) that is substantially perpendicular to the sense axis (23) and permits the drive ring (40) to move in a rocking motion about the sense axis (23); the sense plate (30), the drive ring (40) and the first and second flexures (27, 37) forming a plate-ring-flexure system (15) that has a first resonant mode associated with a first natural frequency where the plate (30) and ring (40) rock substantially in phase about the sense axis (23) and a higher resonant mode associated with a higher natural frequency where the plate (30) and ring (40) rock substantially in opposite phase about the sense axis (23), they method comprising the step of:
providing a drive means for angularly oscillating the drive ring (40) about the drive axis (21) such that a rotational rate of the micro-gyro (10) about a rate axis (22) that is substantially perpendicular to both the sense axis (23) and the drive axis (21) creates an oscillatory coriolis force that causes the plate-ring-flexure (15) system to angularly oscillate about the sense axis (23); and oscillating the drive ring (40) with the drive means at a drive frequency that is near the first natural frequency of the first resonant mode of the plate-ring-flexure system (15) such that the plate (30) and ring (40) rock substantially in phase about the sense axis (23).

2. A micro-gyro (10) of substantially planar construction that senses rotational rate about a rate axis (22) that is substantially parallel to a plane of the micro-gyro comprising:
a substrate (20); an anchor (25) extending upward from the substrate; first inner flex ures (27) connected to the anchor (25) and extending from the anchor (25) above and substantially parallel to the plane of the micro-gyro (10); a sense plate (30) that is flexibly connected to the anchor (25) via the first flexures (27) and constrained to a single-degree-of-freedom rocking motion about a sense axis (23) that is substantially parallel to the plane of the micro-gyro (10) and substantially perpendicular to the rate axis (22); second outer flexures (37) connected to the sense plate (30) and extending from the sense plate (30) substantially parallel to the plane of the micro-gyro (10); a drive ring (40) that is flexibly connected to the sense plate (30) via the second flex ures (37), the second flexures (37) and the drive ring (40) designed to cause the drive ring (40) alone to angularly oscillate at a natural frequency around the sense plate (30) and about a drive axis (21) that is substantially perpendicular to the plane of the micro-gyro (10) and to the sense and rate axes (23, 22), the drive ring (40) driven about the drive axis (21) at a drive frequency; and the first flexures (27), the sense plate (30), the second flexures (37) and the drive ring (40) forming a plate-ring-flexure system (15) wherein an angular motion of the system about the rate axis (22) and the angular oscillation of the ring (40) about the drive axis (21) result in an angular re sponse of the plate-ring-flexure system (15) wherein the plate (30) and ring (40) are configured to oscillate substantially in-phase and substantially at the drive frequency, close to a first mode frequency that constitutes a lowest natural resonant frequency of the plate-ring-flexure system (15) about the sense axis (23).

## Patentansprüche

1. Verfahren zum Antrieb eines Mikrogyroskops (10), das aus einem Substrat (20), einem sich von dem Substrat (20) nach oben erstreckenden Anker (25), einer Messplatte (30), die von dem Anker (25) und über dem Substrat (20) durch erste Verformungselemente (27) gestützt wird, welche seine Bewegung auf eine Schaukelbewegung um eine Messachse (23) mit einem einzigen Freiheitsgrad beschränken, und einem Antriebsring (40), der von der Messplatte (20) durch zweite Verformungselemente (37) gestützt wird, die es dem Antriebsring (40) gestatten, winkelförmig um eine im Wesentlichen senkrecht zur Messachse (23) verlaufende Antriebsachse (21) zu schwingen, und es dem Antriebsring gestatten, sich in einer Schaukelbewegung um die Messachse (23) zu bewegen, besteht, wobei die Messplatte (30), der Antriebsring (40) und die ersten und zweiten Verformungselemente (27, 37) ein Platten-Ring-Verformungssystem (15) bilden, das einen ersten Resonanzmodus, der einer ersten Eigenfrequenz zugeordnet ist, bei der die Platte (30) und der Ring (40) um die Messachse (23) im Wesentlichen in Phase schaukeln, und einen höheren Resonanzmodus, der einer höheren Eigenfrequenz zugeordnet ist, bei der die Platte (30) und der Ring (40) um die Messachse (23) im Wesentlichen in entgegengesetzter Phase schaukeln, aufweist, wobei das Verfahren die folgenden Schritte umfasst:
Bereitstellen eines Antriebsmittels zum winkelförmigen Schwingen des Antriebsrings (40) um die Antriebsachse (21), so dass eine Drehrate des Mikrogyroskops (10) um eine Ratenachse (22), die im Wesentlichen senkrecht sowohl zur Messachse (23) als auch zur Antriebsachse (21) verläuft, eine Schwingcorioliskraft erzeugt, die bewirkt, dass das Platten-Ring-Verformungselementsystem (15) winkelförmig um die Messachse (23) schwingt; und
Schwingen des Antriebsrings (40) mit dem Antriebsmittel mit einer Antriebsfrequenz, die sich nahe der ersten Eigenfrequenz des ersten Resonanzmodus des Platten-Ring-Verformungselementsystems (15) befindet, so dass die Platte (30) und der Ring (40) um die Messachse (23) im Wesentlichen in Phase schwingen.

2. Mikrogyroskop (10) mit im Wesentlichen planarer Konstruktion, das eine Drehrate um eine im Wesentlichen parallel zu einer Ebene des Mikrogyroskops verlaufende Ratenachse (22) misst, mit Folgendem:
einem Substrat (20); einem sich von dem Substrat nach oben erstreckenden Anker (25); mit dem Anker (25) verbundene erste innere Verformungselemente (27), die sich von dem Anker (25) über und im Wesentlichen parallel zu der Ebene des Mikrogyroskops (10) erstrecken; einer Messplatte (30), die über die ersten Verformungselemente (27) flexibel mit dem Anker (25) verbunden ist und auf eine Schaukelbewegung um eine im Wesentlichen parallel zur Ebene des Mikrogyroskops (10) und im Wesentlichen senkrecht zur Ratenachse (22) verlaufende Messachse (23) mit einem Freiheitsgrad beschränkt ist; zweiten äußeren Verformungselementen (37), die mit der Messplatte (30) verbunden sind und sich von der Messplatte (30) im Wesentlichen parallel zu der Ebene des Mikrogyroskops (10) erstrecken; einem Antriebsring (40), der über die zweiten Verformungselemente (37) flexibel mit der Messplatte (30) verbunden ist, wobei die zweiten Verformungselemente (37) und der Antriebsring (40) dazu ausgeführt sind, zu bewirken, dass allein der Antriebsring (40) winkelförmig mit einer Eigenfrequenz um die Messplatte (30) und um eine Antriebsachse (21) schwingt, die im Wesentlichen senkrecht zu der Ebene des Mikrogyroskops (10) und zur Mess- und Ratenachse (23, 22) verläuft, wobei der Antriebsring (40) mit einer Antriebsfrequenz um die Antriebsachse (21) getrieben wird; und die ersten Verformungselemente (27), die Messplatte (30), die zweiten Verformungselemente (37) und der Antriebsring (40) ein Platten-Ring-Verformungssystem (15) bilden, wobei eine Winkelbewegung des Systems um die Ratenachse (22) und die Winkelschwingung des Rings (40) um die Antriebsachse (21) zu einer winkelförmigen Reaktion des Platten-Ring-Verformungssystems (15) führen, wobei die Platte (30) und der Ring (40) dazu konfiguriert sind, im Wesentlichen in Phase und im Wesentlichen mit der Antriebsfrequenz nahe einer Frequenz des ersten Modus zu schwingen, die eine niedrigste Eigenfrequenz des Platten-Ring-Verformungssystems (15) um die Messachse (23) bildet.

## Revendications

1. Procédé d'entraînement d'un micro-gyroscope (10) composé d'un substrat (20), d'un élément d'ancrage (25) s'étendant vers le haut depuis le substrat (20), d'une plaque de détection (30) supportée par l'élément d'ancrage (25) et au-dessus du substrat (20) par des premiers éléments flexibles (27) qui limitent son mouvement à un mouvement oscillatoire à un seul degré de liberté autour d'un axe de détection (23), et une bague d'entraînement (40) supportée par la plaque de détection (20) par des deuxièmes éléments flexibles (37) qui permettent à la bague d'entraînement (40) d'effectuer une oscillation angulaire autour d'un axe d'entraînement (21) qui est pour l'essentiel perpendiculaire à l'axe de détection (23) et permet à la bague d'entraînement (40) de se déplacer selon un mouvement oscillatoire autour de l'axe de détection (23) ; le plaque de détection (30), la bague d'entraînement (40) ainsi que les premiers et deuxièmes éléments flexibles (27, 37) formant un système plaque-bague-élément flexible (15) qui présente un premier mode de résonance associé à une première fréquence naturelle dans lequel la plaque (30) et la bague (40) oscillent pour l'essentiel en phase autour de l'axe de détection (23) et un mode de résonance plus élevé avec une fréquence naturelle plus élevée dans lequel la plaque (30) et la bague (40) oscillent pour l'essentiel en opposition de phase autour de l'axe de détection (23), le procédé comprenant les étapes suivantes :
fournir un moyen d'entraînement pour faire amener la bague d'entraînement (40) en oscillation angulaire autour de l'axe d'entraînement (21) de sorte qu'une vitesse de rotation d'un micro-gyroscope (10) autour d'un axe de vitesse (22) qui est pour l'essentiel perpendiculaire à la fois à l'axe de détection (23) et à l'axe d'entraînement (21) crée une force de Coriolis oscillatoire qui provoque une oscillation angulaire du système plaque-bague-élément flexible (15) autour de l'axe de détection (23) ; et
faire osciller la bague d'entraînement (40) avec le moyen d'entraînement à une fréquence d'entraînement qui est proche de la première fréquence naturelle du premier mode de résonance du système plaque-bague-élément flexible (15) de sorte que la plaque (30) et la bague (40) oscillent pour l'essentiel en phase autour de l'axe de détection (23).

2. Micro-gyroscope (10) de construction essentiellement plane qui détecte la vitesse de rotation autour d'un axe de vitesse (22) qui est pour l'essentiel parallèle à un plan du micro-gyroscope, comprenant :
un substrat (20), un élément d'ancrage (25) s'étendant vers le haut depuis le substrat, des premiers éléments flexibles (27) reliés à l'élément d'ancrage (25) et s'étendant depuis l'élément d'ancrage (25) au-dessus et pour l'essentiel parallèlement au plan du micro-gyroscope (10), une plaque de détection (30) reliée de manière flexible à l'élément d'ancrage (25) par le biais des premiers éléments flexibles (27) et limitée à un mouvement oscillatoire à un seul degré de liberté autour d'un axe de détection (23) qui est pour l'essentiel parallèle au plan du micro-gyroscope (10) et pour l'essentiel perpendiculaire à l'axe de vitesse (22), des deuxièmes éléments flexibles extérieurs (37) reliés à la plaque de détection (30) et s'étendant de la plaque de détection (30) pour l'essentiel parallèlement au plan du micro-gyroscope (10), une bague d'entraînement (40) reliée de manière flexible à la plaque de détection (30) par le biais des deuxièmes éléments flexibles (37), les deuxièmes éléments flexibles (37) et la bague d'entraînement (40) étant conçus pour provoquer une oscillation angulaire de la bague d'entraînement (40) seule à une fréquence naturelle autour de la plaque de détection (30) et autour d'un axe d'entraînement (21) qui est pour l'essentiel perpendiculaire au plan du micro-gyroscope (10) et aux axes de détection et de vitesse (23, 22), la bague d'entraînement (40) étant entraînée autour de l'axe d'entraînement (21) à une fréquence d'entraînement, et les premiers éléments flexibles (27), la plaque de détection (30), les deuxièmes éléments flexibles (37) et la bague d'entraînement (40) formant un système plaque-bague-élément flexible (15) dans lequel un mouvement angulaire du système autour de l'axe de vitesse (22) et l'oscillation angulaire de la bague (40) autour de l'axe d'entraînement (21) résultent en une réponse angulaire du système plaque-bague-élément flexible (15) dans lequel la plaque (30) et la bague (40) sont conçues pour osciller pour l'essentiel en phase à la fréquence d'entraînement, proche d'une première fréquence de mode qui constitue une fréquence de résonance naturelle du système plaque-bague-élément flexible (15), autour de l'axe de détection (23).
